# EUROPEAN PATENT APPLICATION

(11) **EP 4 302 607 A1**
(43) Date of publication of application: **10.01.2024**
(21) Application number: 22183116.7
(22) Date of filing: 05.07.2022
(51) Int. Cl.: A23G 3/34, A23G 3/42, A23G 3/54, A23L 5/41, A23L 5/42, A23L 29/219

(54) **TITANIUM DIOXIDE REPLACEMENT IN HARD PANNED CONFECTIONERY USING STARCH DERIVATIVES**

(71) Applicant: Coöperatie Koninklijke Avebe U.A., 9641 GK Veendam (NL)
(72) Inventor: WESSEL, Stefan Wouter, 9641 GK Veendam (NL); BAKKER, Wybren, 9641 GK Veendam (NL)
(74) Representative: V.O.

(57) **Abstract**

The invention relates to the field of confectioneries, more in particular to hard panned coatings and confectionery products coated with the same. Provided is a hard panned confectionary coating composition comprising (i) a bulk sweetener; (ii) 0.5-7 wt% of an enzymatically modified starch derivative having a dextrose equivalent (DE) of equal to or less than 6, and wherein the starch derivative is produced by enzymatic treatment using alfa-amylase (EC 3.2.1.1) and/or alpha-glucan branching enzyme (EC 2.4.1.18); (iii) water; and (iv) optionally gum Arabic.

## Description

The invention relates to the field of confectioneries, more in particular to hard panned coatings and confectionery products coated with the same.

Panned confectionery concerns the application of a hard, crunchy coating around a candy center, which can be for instance chocolate, liquorice, nuts or chewing gum. The coating is created by applying multiple layers of a saturated (sugar or polyol) syrup to the candy center, where sucrose is most often used for sugar containing candy and polyols for sugar-free products. The layers of syrup are applied one by one on the center which are rotating in a coating drum, after proper distribution of the fluid, every layer is dried before a subsequent layer is applied. Total layer counts can go up to 60 or 80 layers or more, depending e.g. on the desired thickness of the coating and desired final weight of the product.

Hard panned confections are enjoyed by consumers for the multisensory consuming experience that they provide. That is, the coating typically provides a different texture and flavor than the underlying confection, and such confections can be provided in a variety of sizes, shapes and colors. Providing such confections in the vast array of possible combinations of shapes, tastes, textures and colors can be challenging. Producing vibrant colors in particular can be difficult, especially when the underlying confection is colored, and even more so when differently and darker colored, than the overlying coating.

Conventionally, titanium dioxide (TiO₂; E 171) has been utilized as whitening agent in hard panned coatings. The whitening agent can be applied in all layers of the coating or in a part of the coating layers, where it provides an opaque substrate on which to apply colored layers of the panned coating. The opacity provided to a precoat of titanium dioxide allows the colored layers applied thereover to exhibit a more true color. Other white materials may not provide the same level of opacifying as titanium dioxide and colored layers applied over, e.g., calcium carbonate, are not expected to exhibit the same true color as when the same colored layer(s) is applied over a precoat comprising titanium dioxide.

However, due to recent changes in legal regulations, titanium dioxide is banned in certain countries as a food additive. France was the first country to have banned titanium dioxide from January 1st 2020.

In its report of May 2021, the European Food Safety Authority (EFSA) no longer considered titanium dioxide as a safe ingredient. Based on this report, the European Commission might impose restrictions on the use of Titanium Dioxide. Therefore, manufacturers are currently removing titanium dioxide from their formulations and are looking into replacing titanium dioxide with other ingredients.

Companies have come up with alternatives to titanium dioxide, for instance rice starch, sucrose esters or calcium carbonate. These ingredients can promote whiteness by increasing the refractive index in the coating either by means of small inert particles or by promoting crystallization of the bulk sweetener in the coating solution.

However, current solutions for replacing titanium dioxide are facing a set of drawbacks. In case of inert particles, either by rice starch or calcium carbonate, the required dosing of the whitening agent is up to tenfold the amount of titanium dioxide. This seriously affects important processing characteristics, appearance and crunchiness of the coated end product. Furthermore, swelling of rice starch granule must be avoided which limits the temperature range of rice starch. In case of sucrose esters, in addition to affecting crystallization of the bulk sweetener, their emulsifying nature can negatively affect flavor release from the coating or core of the confectionery product. Furthermore, sucrose esters require a high dissolution temperature.

In view of the above, the present inventors set out to provide novel alternatives for titanium dioxide in hard panned confectionary. More specifically, they set out to find alternative whitening agent(s) that provide a balance between having no or minimal effect on processing characteristics, such as viscosity of coating solution and smoothness of the coating surface, whilst maintaining the desired crunchiness and/or flavour release properties. Ideally, they would be perceived by consumers as being more naturally derived. Any such alternatives would desirably provide the coating of the hard panned confection with a CIELAB color difference (delta E, or "Δ E")) of 10 or less compared to a coating on the same confection prepared with titanium dioxide. Another predictor of the commercial acceptance, and desirably success, of any such coating comprising the titanium dioxide alternative would be its ability to exhibit an L*, within 5% of that of the same coating comprising 0.5w% titanium dioxide as whitener on liquid coating composition. The same coating here refers to a coating based on the same ingredients and only differs in the type of whitening agent. Preferably, the whiteness of the confection coated with the titanium dioxide alternative is higher than the confection coated with the same weight amount of coating comprising 0.5 w% titanium dioxide as whitener. Preferably, the agent should be widely applicable and preferably useful in both sucrose and polyol coatings.

It was surprisingly observed that at least some of these goals can be met by the use of selected enzymatically modified starch derivatives. More in particular, it was discovered that starch derivatives produced by enzymatic treatment using alfa-amylase (EC 3.2.1.1) and/or -alpha-glucan branching enzyme (EC 2.4.1.18), and having a dextrose equivalent (DE) of equal to or less than 6, provide a high whiteness while maintaining a good performance in terms of processability, such as short drying time and low dust formation.

Accordingly, the invention provides a hard panned confectionary coating composition comprising an enzymatically modified starch derivative having a dextrose equivalent (DE) of equal to or less than 6, preferably equal to or less than 4, and wherein the starch derivative is produced by enzymatic treatment using alfa-amylase (EC 3.2.1.1), and/or alpha-glucan branching enzyme (EC 2.4.1.18).

For example, the hard panned confectionary coating composition comprises(i) a bulk sweetener; (ii) 0.5-7 wt% of an enzymatically modified starch derivative having a dextrose equivalent (DE) of equal to or less than 6, preferably equal to or less than 4, and wherein the starch derivative is produced by enzymatic treatment using alfa-amylase (EC 3.2.1.1), and/or alpha-glucan branching enzyme (EC 2.4.1.18); (iii) water; and (iv) optionally gum Arabic.

The use of enzymatically modified starches in (confectionary) coating compositions is known in the art.

For example, WO2003/088756 discloses a triple coated confectionary tablet in which the different layers of coating and the tablet center can have different levels of flavors. The first layer comprises a fat, the second layer is a hard shell made from one or more sugars and polyols. The third film forming coating layer is made is from an aqueous mixture of hydroxypropyl starch, sodium alginate, and microcrystalline cellulose. Softeners, such as glycerin may be used as well as celluloses, starches, maltodextrins, gums and film forming agents.

WO2003/088756 does not teach or suggest the use of any type of modified starch in the hard shell coating comprising sugars or polyols.

WO2008/019685 discloses a composition comprising a confectionary base, and one or more encapsulation delivery systems comprising a high intensity sweetener and a natural resin. The confectionary product may also comprise a hard coating including sugar coatings and sugar-free (or sugarless) coating containing crystallizable sugar and/or polyol. The confectionary may also be film-coated comprising film forming agents, plasticisers and o.a. opacifiers in multiple cycles. Suitable colourants/opacifiers include organic dyes and their

lakes, inorganic colouring agents, e.g. titanium oxide. Additionally, film coatings may contain [...] dextrins including maltodextrins [...]. Unlike the present invention, maltodextrins are mentioned in WO2008/019685 as part of the film coating layer and not of the hard shell coating.

US2021/0259274 relates to compositions comprising a low-dye FD&C lake pigment as an opacifying composition to provide desired opacity and enhance color or whiteness to confectioneries and foods, as well as edible coatings and inks applied to food and confectionery products. The low-dye lake can be dispersed in liquid carrier, such as liquid sucrose, or a dry dispersing medium including maltodextrin or aluminum hydroxide. US2021/0259274 is silent about the DE of the maltodextrins, let alone the relevance of selecting low DE starch derivatives for use as whitening agent.

WO2022/002434 relates to the use of a mixture of at least one sweetening agent and at least one chemically unmodified pregelatinized starch to improve the crunchiness of the hard crystalline coating of a sugar-coated product, said starch not having undergone chemical modifications, said coating and said mixture comprising less than 1% by weight of gum arabic relative to the total dry weight of the coating or of the mixture. The chemically unmodified pregelatinized starch is preferably a native starch having undergone only pregelatinization treatment. WO2022/002434 is silent about enzymatically modified starches, and fails to teach the use of starch derivative having a DE of equal to or less than 6. The pea maltodextrin (KLEPTOSE LINECAPS) used as comparative example is a chemically modified starch with DE in the range 15-20.

WO2006/083784 relates to a method of preparing a confectionary product by coating a chewy material with a candy material including an amorphous sweetener which in its turn is coated with a hard shell coating. Highly branched maltodextrin is mentioned as part of the chewy centre, but not as part of the coating layer.

WO2015/170983 in the name of the applicant discloses the incorporation of a highly branched starch (HBS) in a chewy candy or fruit chew composition to fully replace conventional gelators, including Arabic gum and gelatin, without sacrificing the semi-soft, non- sticky and chewy properties of the product.

However, a hard panned coating composition comprising a bulk sweetener and one or more of the specific low DE enzymatically modified starches as herein disclosed is not taught or suggested in the art.

In one embodiment, the enzymatically modified starch derivative has dextrose equivalent (DE) of less than 6, preferably equal to or less than 5, more preferably equal to or less than 4, or even lower. Good results are obtained with very low DE starch derivatives, such as those have a DE below 3.5, below 3 or below 2. In a specific aspect, the starch derivative has a DE below 1.

In one embodiment, the low DE enzymatically modified starch derivative has a molecular branching degree of at least 4%, preferably at least 4.5%, more preferably at least 5%, wherein the molecular branching degree is defined as the percentage of α-1,6 glycosidic linkages of the total of α-1,6 and α-1,4 glycosidic linkages ((α-1,6 /(α-1,6 +α-1,4) *100%)). The degree of molecular branching as used herein refers to the relative amount of α-1,6 glycosidic linkages over the total of α-1,6and α-1,4 glycosidic linkages ((α-1,6 /(α-1,6 +α-1,4) *100%) and can be determined by methods known in the art, e.g. using a combination of reducing end determination/isoamylolysis (Palomo M et al. 2009 Appl. Environm. Microbiology, 75, 1355-1362; Thiemann, V. et al, 2006 Appl. Microb. and Biotechn. 72: 60-71) and measuring the total amount of carbohydrate present via the Anthrone/sulphuric acid method (see e.g. Fales, F. 1951 J. Biol. Chem. 193: 113-124).

To allow for convenient processing, the viscosity of a coating composition of the invention is preferably equal to or less than 200 mPas, preferably equal to or less than 150 mPas, more preferably equal to or less than 120 mPas, as determined by a Brookfield viscometer LV-series equipped with spindle LV 03 spinning at 6 RPM wherein the coating liquid is adjusted to 67° Brix and tested at 50 °C. In one embodiment, it is in the range of about 40 to about 100 mPas.

According to the invention, the starch derivative is produced by enzymatic treatment using either alfa-amylase (EC 3.2.1.1), alpha-glucan branching enzyme (EC 2.4.1.18), or a combination of both enzymes. It is also envisaged to include a mixture of two or more types of starch in the hard panned confectionary coating composition, at least one of which is a low DE starch obtained using alfa-amylase and/or a-glucan branching enzyme.

In one embodiment, the starch derivative is highly branched starch (HBS) produced using alpha-glucan branching enzyme (EC 2.4.1.18). This enzyme is also known as (1-4)-alpha-D-glucan:(1-4)-alpha-D-glucan 6-alpha-D-[(1-4)-alpha-D-glucano]-transferase, 1,4-alpha-glucan branching enzyme, 1,4-alpha-glucan branching enzyme 1, AGBE, alpha-1,4->alpha-1,6-glycosyltransferase, alpha-1,4-glucan branching enzyme, alpha-1,4-glucan:alpha-1,4-glucan 6-glycosyltransferase, alpha-1,4-glucan:alpha-1,4-glucan-6-glycosyltransferase, or alpha-glucan-branching glycosyltransferase.

Normal starch is composed of two constituents, the virtually linear amylose having alpha, 1-4 glycosidic linkages and the branched amylopectin having both alpha, 1-4 glycosidic and alpha, 1-6 linkages . There are also variants of starch with almost exclusively amylopectin (waxy) or containing a high amylose amount. Alpha-glucan branching enzyme (EC 2.4.1.18) is capable of converting the alpha, 1-4 glycosidic linkages present in amylopectin and amylose to alpha, 1-6 bonds, thereby creating new branch points. When incubated with gelatinized starch the amylose and/or long side chains of the amylopectin are transferred to amylopectin with the creation of new alpha, 1-6 glycosidic linkages. This results to a shortening of the average side chain length and a significant reduction of the interaction capacity of the branched molecules.

The alpha-glucan branching enzyme can originate from any microbial source but preferably from a mesophilic or thermophilic microorganisms such as *Aquifex aeolicus* or *Rhodothermus obamensis.* Accordingly, in one embodiment the branching enzyme is a thermostable glycogen branching enzyme obtained from a mesophilic or thermophilic organism, preferably glycogen branching enzyme of *Aquifex aeolicus* or *Rhodothermus obamensis.*

Exemplary starch derivatives obtainable by enzymatic conversion using alpha-glucan branching enzyme (EC 2.4.1.18) include HBS (highly branched starch) and branched glucan having a cyclic structure, also known in the art as highly branched cyclic dextrin (HBCD).

Typically, the HBS for use in the present invention has a molecular branching degree of at least 4%, preferably at least 5%. In one embodiment, the HBS has a molecular branching degree of at least 6%. Preferably, it is at least 6.5%, for example in the range of about 7 to about 10%. Typically, the degree of branching does not exceed 11-12%.

In one embodiment, the HBS has an average molecular weight (Mw) ranging between 0.5*10⁵ g/mol and 1*10⁶ g/mol, preferably between 0.8*10⁵ g/mol and 1.8*10⁵ g/mol, more preferably between 1*10⁵ g/mol and 1.6*10⁵ g/mol. The HBS typically has an average molecular weight (Mw) of about 1.2*10⁵ g/mol. Such starches are commercially available under the tradename Etenia271^{®}, from AVEBE, The Netherlands.

Good results can be obtained with a coating composition comprising HBS in an amount of 1-6 wt.% as is, 1-5 wt.% as is, or 1.5-5 wt.% as is, such as 1-4 wt.% as is, 1.5-4 wt.% as is, 2-4 wt.% as is, 2.5 to 5 wt.%, as is in 100% of the aqueous coating composition which equals 1.2-8.1 wt.%, 1.2-6.5 wt.%, preferably 2-6.5 wt.%, such as 1.2-5 wt.%, 2-5.5 wt.%, 2.5-5 wt.%, 3 to 6.5 wt.% dry HBS on total dry matter of the coating formulation.

Cyclic-structure-containing branched glucans (HBCD; also known in the art as cluster dextrin^{®}) can be produced by heating starch, such as waxy corn starch, to a temperature that is the gelatinization starting temperature or higher of the starch to dissolve the starch, then, cooling the starch solution to a temperature at which branching enzyme can react therewith and, thereafter, adding a branching enzyme to this starch solution to allow to act thereon. See for example US 6,248,566 B1.

US2013/323799 relates to a method for industrially producing a branched glucan having a cyclic structure comprising (1) preparing a mixed liquid which contains a branching enzyme in which starch granules are suspended at a concentration of 5% by weight or more and 50% by weight or less, and allowing the branching enzyme to act on starch in the starch granules, wherein a temperature of the mixed liquid at the time of preparation is 0° C. or higher and not higher than the gelatinization starting temperature of the starch granule; and (2) elevating the temperature of the mixed liquid to 85° C or higher and 129° C or lower.

Preferably, highly branched cyclic dextrin is present in an amount of about 0.5 to about 7 wt.% as is, or 1 to about 5 wt.% as is, such as 1.5 to about 5 wt.% as is, 1 to 4 wt.% as is in 100% of an aqueous coating composition which equals 0.6-9.4 wt.%, 1.2-6.5 wt.%, such as 2-6.5 wt.%, such as 1.2-5 wt.% dry cluster dextrin on total dry matter of the coating formulation.

In a further embodiment, the invention provides a coating composition comprising a starch derivative produced using alfa-amylase (EC 3.2.1.1). This enzyme catalyzes the endohydrolysis of (1→4)-α-D-glucosidic linkages in polysaccharides containing three or more (1→4)-α-linked D-glucose units Other names include glycogenase; endoamylase; Taka-amylase A; 1,4-α-D-glucan glucanohydrolase. It acts on starch, glycogen and related polysaccharides and oligosaccharides in a random manner. Reducing groups are liberated in the α-configuration. The term 'α' relates to the initial anomeric configuration of the free sugar group released and not to the configuration of the linkage hydrolysed.

Low DE starch derivatives produced using alfa-amylase (EC 3.2.1.1) include low DE maltodextrins. Preferably, low DE maltodextrin is present in an amount of about 1 to about 4 wt.% as is, e.g. 1.5 to about 3 wt.%, as is in 100% of the aqueous coating composition which equals 1.2-5.4 wt.%, preferably from 2-4 wt.% dry low DE maltodextrin on total dry matter of the coating formulation. Such starches are commercially available under the tradenames Eliane MD2^{®}, Eliane MD6^{®}, Paselli MD6^{®} from AVEBE, The Netherlands.

In an alternative embodiment, the starch derivative is produced by the sequential enzymatic treatment with alfa-amylase (EC 3.2.1.1), followed by alpha-glucan branching enzyme (E.C.2.4.1.18). This enzyme combination can yield highly branched cyclic dextrins that are distinguished from using only branching enzyme in that it allows for improved processing and regulation of molecular weight. For example sequential application allows to process the starch at a higher concentration. Moreover, it may results in lower molecular weight products as compared when using alpha-glucan branching enzyme (E.C.2.4.1.18) alone.

Hence, the invention also provides a hard panned confectionary coating composition comprising (i) a bulk sweetener; (ii) 0.5-7 wt% of an enzymatically modified starch derivative having a dextrose equivalent (DE) of equal to or less than 6, preferably equal to or less than 4, and wherein the starch derivative is selected from the group consisting of maltodextrins, highly branched starch (HBS) and highly branched cyclic dextrins (cluster dextrins); (iii) water; and (iv) optionally gum Arabic.

Good results are obtained with enzymatically modified starch derivatives having a molecular weight (Mw)in the range of 0.8*10⁵ g/mol to 5*10⁵ g/mol. Molecular mass of starch derivatives can be determined using different techniques, known to the person skilled in the art. For example, the molecular weight is readily determined by GPC-MALLS-RI from Wyatt, USA equipped with a multiangle light scattering instrument (DAWN EOS) and an online viscometer (Viscostar). Refractive index can be determined with RI2000 (Schambeck, Germany).

The starch substrate(s) to be enzymatically modified according to the invention can be obtained from any source. Well known to the artesian are starches from potato, tapioca, corn, wheat, sweet potato, banana, water chestnut, millet, rice, triticale, peas, lentils, beans, etc. These starches all have amylose to amylopectin ratios in the order of 1:3 to 1:7. Starches that consist of amylopectin for more than 95 % are referred to as waxy starches. Other sources of starches have elevated levels of amylose going from 30% to 90% of amylose on dry matter of starch. Well known examples are mung bean, wrinkled pea, high amylose corn starches, etc.

In one embodiment, a coating composition of the invention comprises a starch derivative that is obtained (by enzymatic conversion) from a non-genetically modified or a genetically modified plant variant, such as potato, corn, wheat, tapioca, waxy potato, waxy corn, waxy tapioca, high amylose potato, high amylose corn. In a preferred aspect, the starch derivative is root or tuber starch derivative, such as a potato starch derivative. In another preferred aspect, the starch derivative is a corn starch derivative.

The main component of a hard panned confectionary coating composition is bulk sweetener. In one aspect, the bulk sweetener comprises one or more non-artificial sugar (s), preferably selected from the group consisting of sucrose, glucose, and dextrose, and/or polyol.

Any natural sugar can be used as bulk sweetener, and suitable examples include sucrose, glucose, fructose, galactose, dextrose, and combinations of these. In some embodiments, the natural sugar desirably comprises sucrose. In one aspect, the sugar syrup may contain at least 60 wt% sugar solids, or at least 65 wt% sugar solids, or at least 70 wt% sugar solids. The sugar syrup may contain less than 85 wt% sugar solids, or less than 80 wt% sugar solids. In some embodiments, the sugar syrup contains from 70 wt% to 80 wt% sugar solids. In embodiments using sucrose as the sole, the sucrose sugar syrups may be at least 60° Brix, or at least 65° Brix, or at least 70° Brix. The sucrose sugar syrup may be less than 85° Brix, or less than 80° Brix. In some embodiments, the sucrose sugar syrup is from 70° Brix to 80° Brix.

Polyols are sweeteners, also referred to as sugar alcohols obtained by reduction or hydrogenation of sugars. Polyols are carbohydrates with low digestibility. Polyols found in nature are called "naturally occurring" and include sorbitol, xylitol, erythritol, and mannitol. Lactitol, isomalt, and maltitol are not found in nature. All polyols are synthetically made from sugars on an industrial scale. Most polyols are from glucose or glucose syrups (from starch). Some are from sucrose (cane or beet), lactose (milk), or xylose (wood). Most polyols are less sweet than table sugar: Their sweetness varies from 25 to almost 100 percent as sweet as sugar. Due to polyols reduced sweetness compared to table sugar, they are often blended with high-intensity sweeteners, such as stevia, monk fruit, and sucralose. Preferably, a coating compositions comprises a polyol selected from the group consisting of sorbitol, erythritol, maltitol, xylitol, and isomalt. A further sweetener for use in the present invention is allulose, a low-calorie monosaccharide sugar compound having the chemical formula C₆H₁₂O₆. It is also named as psicose.

As described herein above, a low DE enzymatically modified starch is advantageously used to replace at least partially the use of titanium dioxide (E171). Accordingly, in one preferred embodiment a hard panned confectionary coating composition is free of titanium dioxide (E171). Furthermore, it may also be free of dyes and pigments selected from the group consisting of pigment particles and lake dyes.

Desirably, the sugar syrup layers may advantageously not include substantial amounts of, or any, titanium dioxide. That is, the modified starch(es) may act as a replacement for any titanium dioxide that may otherwise have been conventionally included in the coating syrup. For example, modified starch amounts of less than 7 wt.%, or less than 6 wt.%, or less than 5.5 wt.%, or less than 4.5 wt.% can provide similar results to amounts of titanium dioxide of 0.5 or 1 wt.% or more.

The coating composition may also optionally include other components conventionally used in hard panned coatings. Many such components are known in the art and include, natural polymers, stabilizers, flavors, sensates, emulsifiers, gums, vitamins, minerals, nutraceuticals, stabilizers, or combinations of these.

In one embodiment, the coating composition comprises a gum. The inclusion of gum improves the strength of a coating, e.g. by minimizing or avoiding the occurrence of chips or fragments. Gums, such as gum arabic, and/or proteins, such as gelatin, may be included in layers applied directly to an edible core to fill irregularities to provide a smoother surface for later applied sugar syrups, to provide a substrate that improves adhesion of the subsequent sugar syrup layers, or to create a barrier to oil, moisture, etc. Gums may also be included in intermediate and/or outer sugar syrup layers in order to plasticize the hardened coating, provide better film formation and prevent chipping (breaking of coating on edges). For example, gum such as gum Arabic, may be present in a coating composition in an amount of about 1 to 6 wt%, preferably 2-4 %, based on liquid coating .

A further aspect of the invention relates to a method of providing a hard panned confection product, comprising applying to an edible core a hard panned confectionary coating composition as herein disclosed to provide at least one layer of the hard panned coating. The method typically comprises applying multiple layers of said coating composition, preferably at least partially drying the layers after each application.

Prior to the application of one or more coating layers, the surface of the edible core may be prepared according to known techniques in the art such as gumming, isolating, and stabilizing. For example, in gumming, layers of a high glucose content syrup containing a gum, gelatin, starch, or dextrin may be applied directly to the edible core alternately with a fine crystalline sugar to fill irregularities and smooth ridges. The smoother surface that is obtained may facilitate even coating and adherence of the later applied sugar syrup layers. Isolating is a process of creating a barrier to lipid, water, or natural sugar migration between the edible core and the sugar syrup layers, and may be effected by applying a film containing gelatin or gum to the core in a process similar to gumming. Stabilizing may be required to strengthen a fragile edible core for subsequent hard pan coating with starch-containing coating composition comprising bulk sweetener. Preparation of the surface of the edible core may also be completed with one or more applications of a sucrose sugar syrup.

In some embodiments, sugar syrups may be applied as coating layers directly to the surface of an edible core. In other embodiments, sugar syrups may be applied as coating layers to a prepared surface of an edible core, wherein the surface has been prepared according to a known technique including, gumming, isolating, and stabilizing. For example, the coating composition may be applied to a prepared or pretreated surface of an edible core. Exemplary pretreatments involve a powder or hydrocolloid solution to improve the adhesion of the subsequent coating solution and/or to avoid migration of fat or moisture to or from the core.

Thus, as used herein, the phrase that follows in quotation marks, the application of a confectionary coating composition as a coating layer "to an edible core" does not necessarily denote that the coating syrup is applied directly to the edible core. Rather, a coating syrup that is applied as a coating layer "to an edible core" may be applied directly to the surface of the edible core, or to a prepared surface of an edible core, or to a crystallized sugar syrup layer overlying any number of coating layers overlying the edible core, within the meaning of the phrase.

These coating layers may be formed from sugar syrups comprising or not comprising the low DE enzymatically modified starch(es), and may comprise colorant or be uncolored. In some embodiments, multiple layers of coating syrup not comprising low DE enzymatically modified starch(es) or colorant, and thereafter, multiple layers of coating syrup comprising low DE enzymatically modified starch(es), and no colorant, are applied to the core or a prepared surface of the core. In such embodiments, additional layers of coating syrup comprising one or more colorants and with or without low DE enzymatically modified starch(es) are applied over the sugar syrup/no colorant layers.

The hard panned coating may be applied to any desired edible core. In some embodiments, the edible core may comprise a natural center, such as a nut, groundnut, nut meat, nut paste, dried or infused fruit piece, or dried fruit paste. In other embodiments, the edible core may comprise a confection, such as a boiled sugar syrup, jelly, caramel, nougat, taffy, toffee, liquorice, fondant, chocolate, chewing gum, confectionery coating, or combinations of these.

The coating is suitably applied to the desired edible core according to conventional hard panning processes known in the art. Typically, the term "panning" means the iterative application of sugar-based coatings, such as, e.g., sucrose or dextrose, to masses of edible to produce coated products. In a panning process, multiple applications of a highly concentrated sugar syrup are used to build up the uncolored portion of a sugar shell. This is followed by multiple applications of a concentrated sugar syrup containing colorant. The panning process comprises the repetitive application of thin layers of a coating solution or composition onto an intermixed mass of centers, while mixing the mass of centers, and the drying of each layer of coating solution or composition during which the sugar in the coating crystallizes between the application of layers. Panning is contrasted herein from film coating, i.e., the coatings are applied by a panning process and not a film coating process. While both are industrial processes for preparing coated edible products, such as confections and pharmaceuticals, they are very different processes that make use of very different coating formulations.

Panning processes may typically be driven by the equipment utilized to perform them, which can be coating drums, air treatment facilities, mixing tanks and liquid spraying systems, part of which being commercially available from, e.g., Dumoulin, Driam, Bosch.

Typically, hard panned coatings completely cover the edible core. Depending on the processing and core sizes, this can be achieved after 10 or more coating layers. Total application of coating layers depends on desired coating thickness. For example, up to about 40, or about 35, or up to about 30, coating layers may be provided in the hard panned coatings. The layers may be alternated between layers provided by coating with coating syrups not comprising low DE enzymatically modified starch(es), and in some embodiments, may be provided between coating layers comprising and not comprising the one or more low DE enzymatically modified starch(es).

At least some of the coating layers may also comprise one or more colorants, and typically, outer layers of the panned confectionary coating do. Any desired colorant may be used, so long as the colorant is approved for use in food.

Natural or synthetic colorant(s) or colouring foodstuff(s) may be used. Artificial colors approved for use in food in the US and the European Union. Some synthetic colorants approved for use in the European Union include Quinoline Yellow El04, Carmoisine E122, Ponceau 4R E124, Patent Blue V E131 and Green S E142. In one embodiment, the coating composition does not contain a synthetic colorant of the group of low-dye FD&C lake pigments, e.g. FD&C Blue #1 Lake, FD&C Yellow 5 Lake, FD&C Green #3 Lake, FD&C Yellow #6 Lake, FD&C Red #40 Lake, FD&C Blue #2 Lake, or mixtures thereof.

Useful food colorants that are often referred to as 'natural' are also known, such as, for example, caramel coloring (E150), annatto (E160b), Chlorophyllin (E140), Cochineal (E120), Betanin (E162), Turmeric (curcuminoids, El00), Saffron (carotenoids, El60a), paprika (El60c), Lycopene (E160d), and fruit and vegetable juices. Combinations of synthetic and/or natural colorants may be used, i.e., two or more synthetic colorants may be used, one or more natural colorants and one or more synthetic colorants, or two or more natural colorants are suitable.

After completing the panning process, the end products may be left to dry in a climate controlled environment.

The hard panned coating may constitute up to 40wt%, 35wt%, 30wt%, 25wt%, 20wt%, up to 18wt%, up to 16wt% or up to 14wt% of the coated confectionary end product.

Once hardened, the panned coating may be expected to have a thickness of no more than 3.0 mm, or no more than 2.5 mm, or no more than 2.0 mm, or no more than 1.5 mm, or no more than 1.0 mm. The hard panned coating may also have a thickness of greater than 0.1 mm or greater than 0.2 mm, or greater than 0.3 mm, or greater than 0.4 mm, or greater than 0.5 mm. In some embodiments, the hard panned coating may have a thickness of from 0.1 mm to 3.0 mm, or from 0.2 mm to 2.5 mm, or from 0.3 mm to 2.0 mm, or from 0.4 mm to 1.5 mm, or from 0.5 mm to 1.0 mm.

The invention also provides a hard panned confection obtainable by a method according to the invention.

In one embodiment, the hard panned confection comprises an edible core coated with a hard panned coating comprising one or more sweetener (syrup) layers, wherein at least one sweetener layer comprises an enzymatically modified starch derivative having a dextrose equivalent (DE) equal to or less than 6, and wherein the starch derivative is produced by enzymatic treatment using alfa-amylase (EC 3.2.1.1) and/or alpha-glucan branching enzyme (EC 2.4.1.18).

Furthermore, the hard panned confection may be characterized in that does not comprise titanium dioxide.

The hard panned confection may have a white appearance characterized by a CIELAB L* value greater than or equal to approximately 50, depending on the amount coating layers and color of edible core. In one aspect, the CIELAB L* value is above 60, or 65 or 70. In a preferred embodiment, it is greater than or equal to approximately 72, more preferably greater than or equal to approximately 73, most preferably greater than or equal to approximately 74.

In another preferred embodiment, the L*, value of the hard panned coating of the hard panned confection coated with a composition comprising the starch of the invention as whitening agent has an L* within 5% of the L* value of the same coating composition of a hard panned coating comprising 0.5% titanium dioxide as whitening agent on liquid coating composition and coated with the same weight amount of coating. The same coating here refers to a coating based on the same ingredients and only differs in the type of whitening agent. Preferably, the L* value of the confection coated with the titanium dioxide alternative is higher than the confection coated with the same weight amount of coating comprising 0.5% titanium dioxide as whitener.

The hard panned confection may have an edible core selected from the group of soft, hard, filled, extruded and compressed edible product centers, preferably wherein the edible core comprises an edible material selected from the group consisting of a non-artificial center, a confection, a chewing gum, a grain-based item, and combinations thereof.

In a specific aspect, the hard panned confection comprises (TiO₂-free) coated chocolate lentils, coated extruded liquorice or (sugar-free) chewing gum.

### EXPERIMENTAL SECTION

### Materials and methods

### Process of hard panning

Coated confectionery products such as M&Ms and chewing gum contain a layer of coating of sucrose of polyols. Centers that do not deform due to their own weight can be coated with a hard crunchy coating. The number of coating layers varies depending on requirements. (Bogusz, 2014).

The first step can be the application of a pre-coating. This usually consist of multiple layers of a powdered agent or hydrocolloid solution to improve the adhesion of the subsequent coating solution, and to avoid migration of fat or moisture to or from the centers. It can provide a barrier and foundation for the rest of the process.

After application of the pre-coating, the actual panning step can be initiated. This involves repeated application of the coating liquid, engrossing and drying.

The coating liquid consists of water, a combination of bulk sweeteners, optionally gum Arabic and a whitening/coloring agent at a dry matter level between approximately 65% and 75%. In case of sucrose as the bulk sweetener, glucose can be added to retard crystallization and gum Arabic is added to strengthen the coating, improve adhesion and avoid chipping of corners which is breaking off of parts of the coating especially at corners. Different combinations of polyols are used within the sugar-free industry. Usually between 1 to 6% of the total coating mass including water is gum Arabic. Preferably, the coating comprises between 2 to 4 wt.% Arabic gum.

For every layer enough coating liquid is sprayed in a rotating drum with the centers to properly and equally wet the centers, but little enough to make sure all remaining liquid can be evaporated during the drying step. As a general rule of thumb, the viscosity of the coating solution is around 200 mPas at about50 °C to make sure it is thin enough the distributed among the centers, but not contain too much water. After distribution or engrossing of the coating liquid, preferably conditioned air is blown over the centers in the rotating coating drum to evaporate all excess moisture and create a smooth dry coating layer. Drying speed is depending on various factors such as temperature, relative humidity and crystallization behavior.

This process is repeated until a certain percentage or coating thickness is achieved.

Finally the coating can be closed by applying a film coating layer or polishing the surface using a layer of wax. After removal from the coating pan, the product can be left to remove all excess moisture that might still be present in coating layers and promote crystallization of the bulk sweetener, leading to final appearance and texture. This can be a process of days.

### Recipes

Example recipe of sucrose coating solutions containing titanium dioxide. Here sucrose and glucose can be replaced by various polyols, such as xylitol, for which an example is shown as well.

Titanium dioxide is replaced by other whitening agents in this recipe.

Table 1: Exemplary coating composition for sucrose (A) or Xylitol (B) using starch at 1.5% to replace whitener.

### (A) Sucrose coating compositions (67 BRIX)

| | Dry solids | TiO2 | 0.5% | 1.5% | 3% | 5% | 7% |
|---|---|---|---|---|---|---|---|
| Coating ingredient | [%] | Parts (as is) | Parts (as is) | Parts (as is) | Parts (as is) | Parts (as is) | Parts (as is) |
| Sucrose (dry) | 100 | 62.5 | 62.5 | 61.5 | 60 | 58 | 56 |
| Gum Arabic (as is) | 90 | 4 | 4 | 4 | 4 | 4 | 4 |
| Glucose syrup 81DM (42 DE) | 81 | 1 | 1 | 1 | 1 | 1 | 1 |
| TiO2 whitener (as is) | 100 | 0.5 | 0 | 0 | 0 | 0 | 0 |
| Starch whitener (as is) | 90 | 0 | 0.5 | 1.5 | 3 | 5 | 7 |
| Water | 0 | 32 | 32 | 32 | 32 | 32 | 32 |
| Total | | 100 | 100 | 100 | 100 | 100 | 100 |

Recipes are prepared in a sugar solution of 85 °C until all components are dissolved. Then the solution is cooled to 55 °C and the BRIX value is checked using a digital Brix meter. If necessary, the solution is diluted to 67 BRIX using hot water. A similar procedure is applied for Xylitol coatings. However in this case the solution is diluted to 73 BRIX if necessary.

### (B) Xylitol coating compositions (73 BRIX)

| | Dry solids | TiO2 | 7% |
|---|---|---|---|
| Coating ingredient | [%] | Parts (as is) | Parts (as is) |
| Xylitol (dry) | 100 | 69.5 | 63 |
| Gum Arabic (as is) | 90 | 4 | 4 |
| TiO2 whitener (as is) | 100 | 0.5 | 0 |
| Starch whitener (as is) | 90 | 0 | 7 |
| Water | 0 | 26 | 26 |
| Total | | 100 | 100 |

**Table 2: Various enzymatically modified starches were evaluated at various concentrations at the expense of the bulk sweetener as replacer of titanium dioxide.**

| **Starch derivative** | **Enzyme used for starch modification** | **Branching degree (BD; %)** | **Dextrose Equivalent (DE)** | **Mw (g/mol)** |
|---|---|---|---|---|
| **Etenia 271** | EC 2.4.1.18 | 7.5% | <1 | 100,000-150,000 |
| **Cluster Dextrin** | EC 2.4.1.18 | 5.4% | 1.9 | 500,000 |
| **Etenia 505** | EC 3.2.1.41 | < 3.5% | 6.5 | 294,600 |
| **Eliane MD2** | EC 3.2.1.1 | 5% | 2 | 348,000 |
| **Eliane MD6** | EC 3.2.1.1 | 5% | 6 | |
| **Paselli MD 6** | EC 3.2.1.1 | 3.5% | 6 | 108,500 |
| **Paselli MD10** | EC 3.2.1.1 | 3.5% | 10 | 54,420 |
| **AVEBE MD 12 P** | EC 3.2.1.1 | 3.5% | 12 | |
| **AVEBE MD 14 P** | EC 3.2.1.1 | 3.5% | 14 | |
| **AVEBE MD20 P** | EC 3.2.1.1 | 3.5% | 20 | 13,350 |

Presence of air bubbles in the coating solution makes solution opaque. Influence of air bubbles on final product whiteness in 3% coating solution was tested by applying a coating after removing all air bubbles using vacuum and making a clear solution and applying a coating in which air bubbles were introduced using an ultra turrax (1 min/10.000rpm). The result showed that air bubbles in the coating solution do not affect the appearance of the end product in terms of whiteness.

Table 3 provides an example of a representative panning scheme describing the amount of pre-coating (30% aqueous gum Arabic solution), engrossing time and drying time and environmental conditions. Coating fluid is measured and applied using a syringe.

Coating was continued until at least 30 or more layers were applied to achieve a final weight percentage of about 15% of coating of the end product. Experiments were standardized based on this percentage of coating. Thus, although the weight of fluid per layer and total amount of layers applied can differ per product, all final products are characterized by a final coat weight of 15 wt.%.

After completing the process, samples were left in a climate controlled environment at 50% RH and 23 °C for at least 48 hours to ensure that all end products reached an equilibrium moisture level.

**Table 3**

| | Coating scheme | | 250 grams of chocolate lentils | | | | | | | | |
|---|---|---|---|---|---|---|---|---|---|---|---|
| | | **Layer** | **mL** | **Engrossing time (sec)** | **Drying time (sec)** | **Temperature drying air (°C)** | **Relative humidity** | **Temperature coating fluid (°C)** | **Brix coating fluid** | **Viscosity coating fluid (cP)** | **Percentage coating of total weight (%)** |
| Precoating | 33% gum arabic solution | 1 | 1.25 | 45 | 135 | 21 | 50 | | | | 0 |
| Precoating | | 2 | 1.25 | 45 | 120 | | | | | | |
| Precoating | | 3 | 1.25 | 30 | 100 | | | | | | |
| Precoating | | 4 | 1.25 | 30 | 100 | | | | | | |
| Precoating | | 5 | 1.25 | 30 | 100 | | | | | | |
| | Coating fluid | 6 | 1.25 | 45 | 200 | | | 55 | 67 | 200 | |
| | | 7 | 1.25 | 45 | 200 | | | | | | |
| | | 8 | 1.25 | 30 | 200 | | | | | | |
| | | 9 | 1.25 | 30 | 150 | | | | | | |
| | | 10 | 2 | 30 | 150 | | | | | | |
| | | 11 | 2 | 30 | 120 | | | | | | |
| | | 12 | 2 | 30 | 120 | | | | | | |
| | | 13 | 2 | 30 | 120 | | | | | | |
| | | 14 | 2.5 | 30 | 150 | | | | | | |
| | | 15 | 3 | 30 | 150 | | | | | | |
| | | 16 | 3 | 30 | 150 | | | | | | |
| | | 17 | 3 | 30 | 150 | | | | | | |
| | | 18 | 3 | 30 | 150 | | | | | | |
| | | 19 | 3 | 30 | 150 | | | | | | |
| | | 20 | 4 | 30 | 150 | | | | | | |
| | | 21 | 4 | 30 | 150 | | | | | | |
| | | 22 | 4 | 30 | 150 | | | | | | |
| | | 23 | 4 | 30 | 150 | | | | | | |
| | | 24 | 4 | 30 | 150 | | | | | | |
| | | 25 | 4 | 30 | 150 | | | | | | |
| | | 26 | 4 | 30 | 90 | | | | | | |
| | | 27 | 4 | 30 | 90 | | | | | | |
| | | 28 | 4 | 30 | 60 | | | | | | |
| | | 29 | 4 | 30 | 60 | | | | | | |
| | | 30 | 4 | 30 | 60 | | | | | | |
| | | 31 | 4 | 30 | 60 | | | | | | |
| | | 32 | 4 | 30 | 60 | | | | | | |
| | | 33 | 4 | 30 | 60 | | | | | | |
| | | 34 | 4 | 30 | 90 | | | | | | |
| | | 35 | 3 | 30 | 90 | | | | | | 20 |

### Analyses

### • Whiteness: CIELAB - L*a*b* color space

To assess the whiteness, next to visual observation, a Lab measurement was performed on the coated product using a ColorFlex EZ spectrophotometer. In this assay, the cup that is usually used for powders or liquids was filled with coated product. Due to the shape of the coated product, absolute values may not be completely representative. However, these measurement adequately reflected a visual observations of whiteness. Measurements where repeated 10 times for every product, rearranging the products in the cup before every measurement, averaging out effects of shape.

L* represents perceived lightness of the coated product, in which 0 is black and 100 is white. A higher value is a higher lightness/whiteness.

An L* value within 5% of that obtained with titanium dioxide is generally considered a good predictor of consumer acceptance.

### Results

### Example 1: Low DE enzymatically modified starches can replace titanium dioxide in a hard panned coating.

In this example, various types of enzymatically modified starches were evaluated at a concentration of 3% as is in an aqueous coating composition with respect to their effects on a hard panned confectionary coating. More specifically, starches were included in a sucrose coating composition, which was then applied onto chocolate lentils.

The results are summarized in Table 4. It shows that a specific subset of low DE modified starches gives the best coating performance in terms of processability (drying time and dust formation), while providing a high whiteness value L* as well. Notably, the whiteness obtained is even higher than of some state of the art alternatives.

**Table 4 Sucrose based coating of chocolate lentils**

| **Variant** | **Viscosity** | **T coating** | **RH Air** | **T Air** | **Drying time** | **Dust formation** | **Sum of attributes dust and drying** | **Whiteness** |
|---|---|---|---|---|---|---|---|---|
| Sugar coating | **[mPas]** | **°C** | **%** | **°C** | ○**(short) to** ○○○○ **(long)** | ○ **(little) to** ○○○○ **(much)** | **(lower is better)** | **L*** |
| No whitener | 30 | 53 | 32 & 69 | 22 | ○ | ○ | 2 | 68.1 |
| 0.5% titanium dioxide | 32 | 53 | 20 | 28 | ○ | ○ | 2 | 74.1 |
| 7% Remy Beneo B7 | 120 | 53 | 41 | 24 | ○ | ○ | 2 | 69.8 |
| 0.5% Sucrose esters | - | - | 40 | 23 | ○ | ○ | 2 | 75.2 |
| | | | | | | | | |
| 3% Etenia 271 | 43 | 52 | 32 | 21 | ○○ | ○○ | 4 | 76.0 |
| 3% Cluster dextrin (Glico) | 200 | 54 | 51 | 22 | ○○ | ○○ | 4 | 76.3 |
| 3% Eliane MD 2 | 60 | 55 | 30 | 22 | ○○ | ○○ | 4 | 78.9 |
| 3% Eliane MD 6 | 60 | 55 | 35 | 23 | ○○ | ○○ | 4 | 77.2 |
| 3% Paselli MD 6 | 40 | 55 | 33 | 23 | ○○ | ○○○ | **5** | 79.8 |
| 3% Paselli MD 10 | 140 | 55 | 26 | 23 | ○○ | ○○○ | **5** | 78.5 |
| 3% AVEBE MD 12P | 90 | 55 | 33 | 23 | ○○○ | ○○○ | 6 | 76.8 |
| 3% AVEBE MD 14P | 90 | 55 | 38 | 22 | ○○○ | ○○○ | 6 | 77.2 |
| 3% AVEBE MD 20P | 80 | 55 | 43 | 23 | ○○○○ | ○○ | 6 | 76.8 |

Ideally, the observed viscosity is ≤ 200 mPas and L* ≥ 74, preferably ≥ 75. The sum of attributes "dust and drying time is preferably ≤6, more preferably ≤5, most preferably ≤4.

The data also show that coating compositions comprising starch that was enzymatically modified with pullulanase (EC 3.2.1.41), and modified starches with DE higher than 6 do not provide a desired performance, mostly due to their poor processability. It was also observed that the addition of modified starches having a branching degree above 3.5 provide a very good overall performance.

### Example 2: Effect of modified starch concentrations.

Next, different concentrations of each type of low DE, enzymatically modified starches were evaluated as titanium dioxide replacer in a sucrose coating on chocolate lentils.

Table 5 shows that increasing the concentration of highly branched starch obtained with a-glucan branching enzyme (EC 2.4.1.18) gives a higher whiteness yet a decreased processing performance. Optimal results were achieved using 1.5 to 5 w% HBS (as is).

**Table 5 Sucrose based coating of chocolate lentils**

| **Variant** | **Viscosity** | **T coating** | **RH Air** | **T Air** | **Drying time** | **Dust formation** | **Sum of attributes dust and drying** | **Whiteness** |
|---|---|---|---|---|---|---|---|---|
| Sugar coating | **[mPas]** | **°C** | % | **°C** | ○ **(short) to** ○○○○ **(long)** | o **(little) to** ○○○○ **(much)** | **(lower is better)** | **L*** |
| 0.5% Etenia 271 | 29 | 53 | 27 | 21 | ○ | ○ | 2 | 73.7 |
| 1.5% Etenia 271 | 60 | 53 | 46 | 22 | ○○ | ○ | 3 | 74.3 |
| 3% Etenia 271 | 43 | 52 | 32 | 21 | ○○ | ○○ | 4 | 76.0 |
| 5% Etenia 271 | 50 | 53 | 29 | 21 | ○○ | ○○ | 4 | 76.8 |
| 7% Etenia 271 | 210 | 48 | 26 | 22 | ○○○ | ○○○ | 6 | 74.6 |

Table 6 shows that increasing the concentration of highly branched cyclic dextrin obtained using alpha-branching enzyme (EC 2.4.1.18) likewise gives a higher whiteness but worse performance. Optimal results were achieved using 0.5 to 5w% highly branched cluster dextrin (as is).

**Table 6 Sucrose based coating of chocolate lentils**

| **Variant** | **Viscosity** | **T coating** | **RH Air** | **T Air** | **Drying time** | **Dust formation** | **Sum of attributes dust and drying** | **Whiteness** |
|---|---|---|---|---|---|---|---|---|
| Sugar coating | **[mPas]** | **°C** | **%** | **°C** | ○**(short) to** ○○○○ **(long)** | ○ **(little) to +** ○○○○**(much)** | **(lower is better)** | **L*** |
| 0.5% Cluster dextrin | 160 | 55 | 58 | 23 | ○ | ○ | 2 | 74.5 |
| 1.5% Cluster dextrin | 1 00 | 50 | 60 | 22 | ○ | ○ | 2 | 75.3 |
| 3% Cluster dextrin | 200 | 54 | 51 | 22 | ○○ | ○○ | 4 | 76.3 |
| 5% Cluster dextrin | 260 | 50 | 60 | 21 | ○○○ | ○○ | **5** | **74.0** |
| 7% Cluster dextrin | 300 | 53 | 53 | 22 | ○○○○ | ○ | **5** | 66.6 |

Table 7 shows that, similar to Tables 5 and 6, also modified starch (Eliane MD2) obtained using alfa-amylase (EC 3.2.1.1) when applied in a sucrose coating, gives an excellent performance at a concentration of 1.5 to 3w% as is.

**Table 7 Sucrose based coating of chocolate lentils**

| **Variant** | **Viscosity** | **T coating** | **RH Air** | **T Air** | **Drying time** | **Dust formation** | **Sum of attributes dust and drying** | **Whiteness** |
|---|---|---|---|---|---|---|---|---|
| Sugar coating | **[mPas]** | **°C** | **%** | **°C** | ○**(short) to** ○○○○ **(long)** | ○ **(little) to** ○○○○ **(much)** | **(lower is better)** | **L*** |
| 1.5% Eliane MD 2 | 80 | 55 | 30 | 22 | ○ | ○○○ | 4 | 79.8 |
| 3% Eliane MD 2 | 60 | 55 | 30 | 22 | ○○ | ○○ | 4 | 78.9 |

Table 8 confirms the excellent whiteness obtained using a sucrose coating composition comprising 3w% highly branched starch (Etenia 271) obtained with glucan branching enzyme (EC 2.4.1.18), when coating extruded liquorice. Whiteness is even higher than obtained with 0.5 w% TiO₂

**Table 8 Sucrose based coating of extruded liquorice**

| **Variant** | **Viscosity** | **T coating** | **RH Air** | **T Air** | **Drying time** | **Dust formation** | **Sum of attributes dust and drying** | **Whiteness** |
|---|---|---|---|---|---|---|---|---|
| Sugar coating | **[mPas]** | **°C** | **%** | **°C** | ○**(short) to** ○○○○ **(long)** | ○ **(little) to** ○○○○ **(much)** | **(lower is better)** | **L*** |
| No whitener | 30 | 51 | 37 | 25 | ○ | ○ | 2 | 70.3 |
| 0.5% titanium dioxide | 32 | 53 | 35 | 23 | ○ | ○ | 2 | **78.5** |
| 3% Etenia 271 | 33 | 50 | 24 | 23 | ○○ | ○○ | 4 | 79.3 |

Table 9 confirms the excellent whiteness obtained when including highly branched starch obtained with a-glucan branching enzyme (EC 2.4.1.18) in xylitol coated chewing gum.

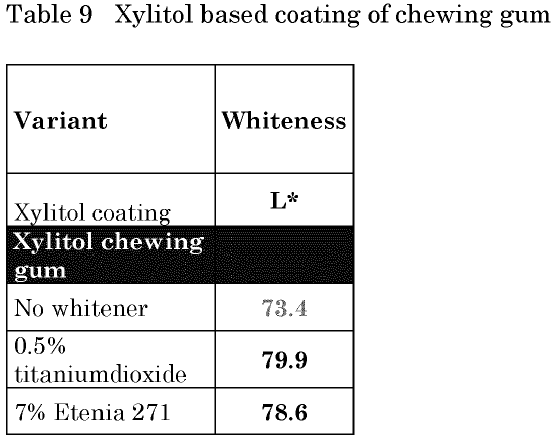

## Claims

1. A hard panned confectionary coating composition comprising
(i) a bulk sweetener;
(ii) 0.5-7 wt% of an enzymatically modified starch derivative having a dextrose equivalent (DE) of equal to or less than 6, preferably equal to or less than 4, and wherein the starch derivative is produced by enzymatic treatment using alfa-amylase (EC 3.2.1.1), and/or alpha-glucan branching enzyme (EC 2.4.1.18);
(iii) water; and
(iv) optionally gum Arabic.

2. Coating composition according to claim 1, wherein the starch derivative has a molecular branching degree of at least 4%, preferably at least 4.5%, wherein the molecular branching degree is defined as the percentage of α-1,6 glycosidic linkages of the total of α-1,6 and α-1,4 glycosidic linkages ((α-1,6 /(α-1,6 +α-1,4) *100%)).

3. Coating composition according to claim 1 or 2, wherein the starch derivative has a molecular weight in the range of 500 to 200.000 Daltons.

4. Coating composition according to any one of claims 1-3, wherein the starch derivative is a highly branched cyclic dextrin produced using alpha-glucan branching enzyme (EC 2.4.1.18), optionally preceded by alfa-amylase (EC 3.2.1.1), preferably wherein said highly branched cyclic dextrin is present in an amount of 0.5-7 wt.% as is, in 100% of an aqueous coating composition.

5. Coating composition according to any one of claims 1-3, wherein the starch derivative is highly branched starch (HBS) produced using alpha-glucan branching enzyme (EC 2.4.1.18), preferably wherein said HBS is present in an amount of 1-6 wt.%, more preferably 1.5-5wt.% as is in 100% of the aqueous coating composition.

6. Coating composition according to any one of claims 1-3, wherein the starch derivative is a low DE maltodextrin produced using alfa-amylase (EC 3.2.1.1), preferably wherein said low DE maltodextrin is present in an amount of 1-4 wt.%, more preferably 1.5-3 wt.% as is, in 100% of the aqueous coating composition.

7. Coating composition according to any one of the preceding claims, wherein the starch derivative originates from a non-genetically modified or a genetically modified plant variant, such as potato, corn, wheat, tapioca, waxy potato, waxy corn, waxy tapioca, high amylose potato, high amylose corn, preferably wherein the starch derivative is a corn or potato starch derivative.

8. Coating composition according to any one of the preceding claims, wherein the bulk sweetener comprises a non-artificial sugar, preferably selected from the group consisting of sucrose, glucose, and dextrose, and/or a polyol, more preferably wherein the polyol is selected from the group consisting of sorbitol, maltitol, xylitol, and isomalt.

9. Coating composition according to any one of the preceding claims, wherein the coating composition is free of titanium dioxide (E 171), preferably free of titanium dioxide and dyes and pigments selected from the group consisting of pigment particles and lake dyes.

10. A method of providing a hard panned confection product, comprising applying to an edible core a coating composition according to any one of claims 1-9 to provide at least one layer of the hard panned coating.

11. The method of claim 10, comprising applying multiple layers of said coating composition, preferably at least partially drying the layers after each application.

12. The method of claim 10 or 11, wherein the coating composition is applied to a prepared surface of the edible core.

13. A hard panned confection obtainable by a method according to any one of claims 10-12.

14. A hard panned confection, comprising an edible core coated with a hard panned coating comprising one or more syrup layers, wherein at least one syrup layer comprises an enzymatically modified starch derivative having a dextrose equivalent (DE) equal or less than 6, and wherein the starch derivate is produced by enzymatic treatment using alfa-amylase (EC 3.2.1.1) and/or alpha-glucan branching enzyme (EC 2.4.1.18), and which hard panned confection is free from titanium dioxide.

15. The hard panned confection of claim 13 or 14, having
(i) a white appearance **characterized by** a CIELAB L* value greater than or equal to 70, preferably greater than 72 and/or
(ii) an L* within 5% of the L* value of the same coating composition of a hard panned coating comprising 0.5 wt% titanium dioxide.

16. The method according to any one of claims 10-12 or the hard panned confection according to any one of claims 13-15, wherein the edible core is selected from the group of soft, hard, filled, extruded and compressed edible product centers, preferably wherein the edible core comprises an edible material selected from the group consisting of a non-artificial center, a confection, a chewing gum, a grain-based item, and combinations thereof.
